# EUROPEAN PATENT SPECIFICATION

(11) **EP 3 988 334 B1**
(45) Date of publication and mention of the grant of the patent: **04.02.2026**
(21) Application number: 19934098.5
(22) Date of filing: 11.12.2019
(51) Int. Cl.: B60C 11/03, B60C 11/12, B60C 11/04

(54) **TIRE**
REIFEN
BANDAGE

(30) Priority: 19.06.2019 JP 2019113859
(43) Date of publication of application: 27.04.2022
(73) Proprietor: Bridgestone Corporation, Tokyo 104-8340 (JP)
(72) Inventor: KARASAWA, Mayuko, Tokyo 104-8340 (JP)
(74) Representative: Marks & Clerk LLP
(86) International application number: PCT/JP2019/048517
(87) International publication number: WO 2020/255452

(56) References cited:
- EP-A2- 1 864 830
- WO-A1-2017/018174
- JP-A- 2007 045 324
- JP-A- 2011 042 260
- JP-A- 2014 218 101
- JP-A- 2015 016 839
- JP-A- 2015 504 808
- JP-A- 2016 132 359
- JP-A- 2017 088 125
- JP-A- 2017 128 194
- JP-A- H10 211 805
- US-A- 3 494 401
- US-A- 4 266 592
- US-A1- 2010 108 214
- US-A1- 2017 368 886

## Description

### TECHNICAL FIELD

The present invention relates to tires, and more particularly to a tire which is made to be able to properly grasp a wear limit.

### BACKGROUND

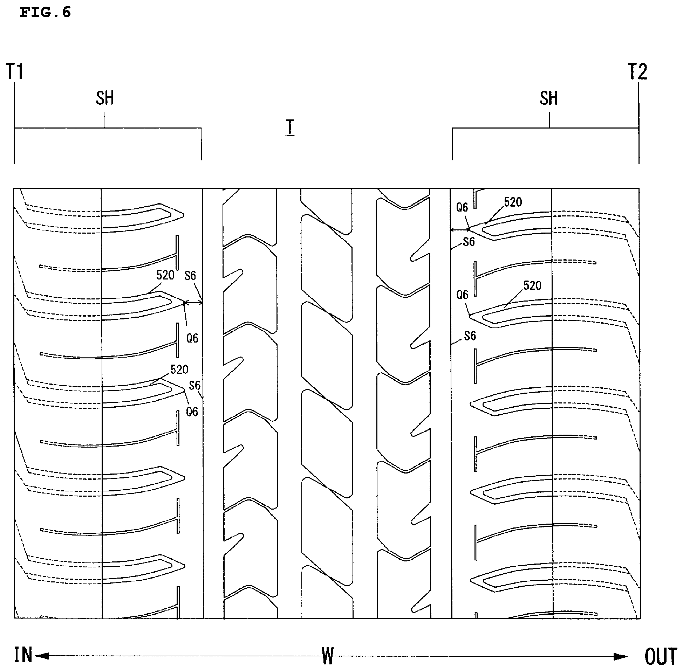

Conventionally, for tires improved in a wet performance and a road noise performance, there has been a tendency of setting groove widths of circumferential grooves to be wide, as illustrated in FIG. 6.

However, with the tire illustrated in FIG. 6, there has been a drawback that, attributable to the setting of the groove widths of the circumferential grooves to be wide, the inside of a groove bottom is easily shined by light and the groove bottom is seen bright from outside, resulting in that a user is misled to believe as if a wear limit is being reached before reaching an original wear limit of the tire. Attention is also drawn to the disclosures of JP2016/132359A, JP2017/124712A, US4266592A, US2017/368886A, EP1864830A, JP2014/218101A, JP2017/088125A and JP2017/128194A.

### SUMMARY OF THE INVENTION

### Technical Problem

The present invention has been made in view of the above-mentioned problem, and provides a tire capable of reducing and preventing a possibility of misrecognition by a user with respect to the wear limit, while ensuring a wet performance and a road noise performance. Solution to Problem

As a configuration of the tire for solving the above-mentioned problem, a tire according to an aspect of the invention is provided as claimed in claim 1.

### BRIEF DESCRIPTION OF THE DRAWINGS

FIG. 1 is a plan view illustrating a tread pattern (Embodiment 1);
FIG. 2 is an enlarged view illustrating the tread pattern;
FIG. 3 is a plan view illustrating a tread pattern (Example 2);
FIG. 4 is a plan view illustrating a tread pattern (Example 3);
FIGS. 5A and 5B are respectively a table showing results of simulation of tires according the embodiment and a table showing evaluations of the tires; and
FIG. 6 is a plan view illustrating a conventional tread pattern.

### DESCRIPTION OF EMBODIMENT

The present invention will be described in detail below through an embodiment of the invention; however, the following embodiment is not intended to limit the inventions set forth in the claims, and all of combinations of the features described in the embodiment are not necessarily essential to the solving means of the invention.

Hereinafter, the invention is explained based on the embodiment; however, dimensions of each part of a tire 1 are based on the method described in the year 2018 edition of the "YEAR BOOK" published by the Japan Automobile Tyre Manufacturers Association, Inc. (JATMA). The arrow C in the figures indicates a tire circumferential direction (simply referred to as "circumferential direction"), and the arrow W indicates a tire width direction (simply referred to as "width direction"). The width direction is a direction parallel to a tire rotation axis. For tires, a mounting direction of the tires to a vehicle is defined, and the sign IN in the figures indicates an inward direction of the vehicle, and the sign OUT indicates an outward direction of the vehicle.

### [Embodiment 1]

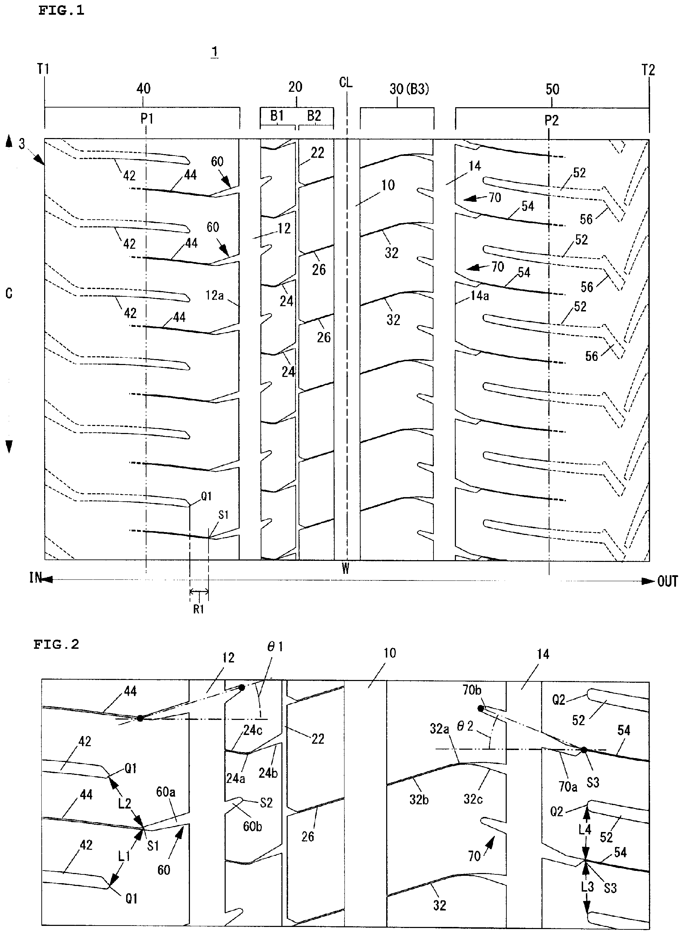

FIG. 1 is a plan view illustrating a tread pattern of a tread 3 of the tire 1 inside of which air is filled, for example. As illustrated in FIG. 1, three circumferential grooves 10; 12; 14 are formed in the tread 3, each extending in parallel to each other. The circumferential groove 10 is a groove that extends continuously in the circumferential direction at a center of the tire width direction including an equatorial plane CL of the tire 1. The circumferential groove 12 is a groove that extends continuously in the circumferential direction at a side in the width direction inner than the circumferential groove 10. The circumferential groove 14 is a groove that extends continuously in the circumferential direction at a side in the width direction outer than the circumferential groove 10.

### [About the inner-side land portion]

An inner-side land portion 20 is formed between the circumferential groove 10 and the circumferential groove 12 adjacent to the inner side of the circumferential groove 10 in the width direction. The inner-side land portion 20 is an area extending in the circumferential direction, which is defined by the circumferential groove 10 and the circumferential groove 12, and at an approximate center in the width direction, a narrow groove 22 is formed. The narrow groove 22 is a groove that extends continuously in the circumferential direction parallel to each of the circumferential grooves 10; 12; 14. The narrow groove 22 illustrated in the figures is set to be between 0.1 mm and 3.0 mm, for example. Further, the narrow groove 22 illustrated in the figures is formed at a position where the inner-side land portion 20 is equally divided (5:5) in the width direction. However, the narrow groove 22 may be formed at a position where the inner-side land portion 20 is divided to 3:7 to 7:3, for example, and a position where the inner-side land portion 20 is divided to 4:6 to 6:4 is more preferable. By forming such a narrow groove 22, water can be drained through the narrow groove 22, which improves a water drainage performance, and furthermore, a road noise can be reduced by virtue of relaxation of a rigidity of the inner-side land portion 20. Incidentally, the narrow groove may be, for example, a corrugated or zigzag shaped groove as long as the narrow groove has the above-mentioned functions.

In the inner-side land portion 20, inner-side sipes 24 that extend continuously from the narrow groove 22 toward the circumferential groove 12 located at a side inner than the narrow groove 22, and outer-side sipes 26 that extend continuously from the narrow groove 22 toward the circumferential groove 10 located at a side outer than the narrow groove 22, are formed.

The inner-side sipes 24 are grooves whose both end parts are open to and communicated with the narrow groove 22 and the circumferential groove 12 respectively, and which are formed at a regular pitch along the circumferential direction. As illustrated in FIG. 2, each of the inner-side sipes 24 has a curved part 24a that is convex toward one side in the circumferential direction, an expansion part 24b that expandingly extends toward the narrow groove 22 with the curved part 24a as a base point, and a straight-line part 24c that linearly extends toward the circumferential groove 12 with the curved part 24a as the base point. The expansion part 24b inclines toward the other side in the circumferential direction, extends with the grove width thereof gradually expanding toward the narrow groove 22, and reaches its maximum width at the opening part open to the narrow groove 22. By forming such expansion parts 24b, water absorbed by the inner-side sipes 24 is properly conducted to the narrow groove 22 side when running on a wet road surface, whereby the water drainage performance (wet performance) is improved and the road noise is reduced by virtue of relaxation of the rigidity of the block.

The straight-line part 24c linearly extends toward the circumferential groove 12 while inclining toward the other side in the circumferential direction with the curved part 24a as the base point. As such, the inner-side sipes 24 are formed in a generally V-shape with the curved part 24a that is convex toward one side in the circumferential direction. Incidentally, in the illustrated example, the curved part 24a is formed in the curved shape with no corners, but it may also be formed in a bent shape with a corner.

As illustrated in FIG. 1, the outer-side sipes 26 are grooves whose both end parts are open to and communicated with the narrow groove 22 and the circumferential groove 10 respectively, and which are formed at a regular pitch along the circumferential direction. The outer-side sipes 26 linearly extend from the narrow groove 22 toward the circumferential groove 10 while inclining to the other side in the circumferential direction. One end side of the outer-side sipe 26 that faces the narrow groove 22 is expanded in the circumferential direction. In the same manner as described above, by expanding the one end side of the outer-side sipe 26 facing the narrow groove 22, the wet performance and the road noise performance are improved.

As described above, in the inner-side land portion 20 defined by the circumferential groove 10 and the circumferential groove 12, the narrow groove 22, the inner-side sipes 24 and the outer-side sipes 26 are formed. By the narrow groove 22, the circumferential groove 12 and the inner-side sipes 24, a first block row B1 is defined, in which blocks of the same shape are regularly arranged along the circumferential direction, and by the narrow groove 22, the circumferential groove 10 and the outer-side sipes 26, a second block row B2 is defined, in which blocks of the same shape are arranged along the circumferential direction. In other words, the inner-side land portion 20 is formed of a plurality of block rows, which are the first block row B1 defined by the narrow groove 22, the circumferential groove 12 adjacent to the inner side of the narrow groove 22 and the inner-side sipes 24 extending in the width direction, and the second block row B2 defined by the narrow groove 22, the circumferential groove 10 adjacent to the outer side of the narrow groove 22 and the outer-side sipes 26 extending in the width direction.

The inner-side sipes 24 and the outer-side sipes 26 formed in the inner-side land portion 20 are formed at positions that are displaced (phase displacement) from each other in the circumferential direction. In more detail, the inner-side sipes 24 and the outer-side sipes 26 are so formed that extension lines of the inner-side sipes 24 and of the outer-side sipes 26 do not cross each other in the inner-side land portion 20. By setting such a positional relationship, distribution of the block rigidity of the first block row B1 and the block rigidity of the second block row B2 can be equalized within the inner-side land portion 20, hence the wear resistance performance can be improved and the road noise can be reduced. Furthermore, from the viewpoint of the water drainage performance, it is desirable to set inclination angles of the inner-side sipes 24 and the outer-side sipes 26 so that the angles become parallel to the width direction or an acute angle side becomes 45° or less with respect to the width direction. Here, the inclination angle of the sipe refers to an angle of the straight line connecting the innermost end point and the outermost end point of the sipe.

### [About the outer-side land portion]

An outer-side land portion 30 is formed between the circumferential groove 10 and the circumferential groove 14 that is adjacent to the outer side of the circumferential groove 10. Sipes 32, which continuously extend from the circumferential groove 10 toward the circumferential groove 14, are formed in the outer-side land portion 30, and a block row B3 in which blocks of the same shape are arranged along the circumferential direction, is formed by the sipes 32. The sipes 32 are grooves whose both end parts are open to and communicated with the circumferential groove 10 and the circumferential groove 14 respectively, and are formed at a regular pitch along the circumferential direction. As illustrated in FIG. 2, each of the sipes 32 has a curved part 32a that is convex toward the other side in the circumferential direction, which is the opposite direction to the inner-side sipe 24, a straight-line part 32b that linearly extends toward the circumferential groove 10 with the curved part 32a as a base point, and an expansion part 32c that extends while expanding toward the circumferential groove 14 with the curved part 32a as the base point. An extension line on the inner side of the straight-line part 32b coincides with the extension direction of the outer-side sipe 26 so as to equalize the rigidity of each block in the block row B2 and the rigidity of each block in the block row B3, which are adjacent to each other. The groove width of the expansion part 32c increases as it goes toward the circumferential groove 14, so as to improve the water drainage performance and the road noise performance. The inclination angle and the sipe width of the sipe 32 may be set arbitrarily within the similar range as that of the inner-side sipe 24 and the outer-side sipe 26 described above.

### [About the inner-side shoulder portion]

As illustrated in FIG. 1, an inner-side shoulder portion 40 is formed on the inner side of the circumferential groove 12. The inner-side shoulder portion 40 is an area, from an inner end edge 12a of the circumferential groove 12 to an inner-side tread end T1 inclusive, extending in the circumferential direction. Of this area, an area up to a ground contact end indicated by P1 is a ground contact area (ground contact end) that contacts a road surface, and an area inner than the ground contact end P1 is a non-ground contact area. As illustrated in FIG. 1, in the inner-side shoulder portion 40, a plurality of lateral grooves 42 that extend in the width direction generally intersecting the circumferential groove 12, and inner-side shoulder sipes 44 each of which extends in the width direction between each of the lateral grooves 42, are formed.

The lateral grooves 42 are grooves that incline from the inner-side tread end T1 toward one side in the circumferential direction and extend toward the circumferential groove 12 while gently inclining toward one side in the circumferential direction with a bent part as a base point, and terminate in the ground contact area without crossing the circumferential groove 12.

As illustrated in FIG. 2, the inner-side shoulder sipes 44 are narrow grooves that are communicated with inner-side recesses 60, which are described later, formed so as to cross the circumferential groove 12 in the width direction, and terminate in the non-ground contact area while gently inclining toward the other side in the circumferential direction. Each of the inner-side shoulder sipes 44 extends at an approximate center of a separation distance, in the circumferential direction, of the lateral grooves 42; 42 that are adjacent to each other in the circumferential direction, so as to follow the shape of the lateral grooves 42.

### [About the outer-side shoulder portion]

As illustrated in FIG. 1, an outer-side shoulder portion 50 is formed on the outer side of the circumferential groove 14. The outer-side shoulder portion 50 is an area, from an outer end edge 14a of the circumferential groove 14 to an outer-side tread end T2 inclusive, extending in the circumferential direction. Of this area, an area up to a ground contact end indicated by P2 is a ground contact area (ground contact end) that contacts the road surface, and an area outer than the ground contact end P2 is a non-ground contact area. In other words, the ground contact area of the tire according to the present embodiment is a range from P1 to P2. As illustrated in FIG. 1, in the outer-side shoulder portion 50, a plurality of lateral grooves 52 that extend in the width direction generally intersecting the circumferential groove 14, and outer-side shoulder sipes 54 each of which extends in the width direction between each of the lateral grooves 52, are formed. The lateral grooves 52 are formed in the vicinity of the outer-side tread end T2 and communicated with tip end sides of decorative grooves 56 that extend from the outer side toward the inner side in the width direction while inclining to the other side in the circumferential direction. The lateral grooves 52 terminate in the ground contact area via the non-ground contact area while gently inclining toward the other side in the circumferential direction.

The outer-side shoulder sipes 54 are narrow grooves that are communicated with outer-side recesses 70, which are described later, formed so as to cross the circumferential groove 14 in the width direction, and that reach the non -ground contact area on the outer-side tread end T2 side while gently inclining toward one side in the circumferential direction. The outer-side shoulder sipe 54 extends at an approximate center of a separation distance, in the circumferential direction, of the lateral grooves 52; 52 that are adjacent to each other in the circumferential direction, in such a manner as to follow the shape of the lateral grooves 52.

### [About the inner-side recess]

As illustrated in FIGS. 1 and 2, inner-side recesses 60 are formed in the circumferential groove 12 that separates the inner-side land 20 from the inner-side shoulder portion 40, and the outer-side recesses 70 are formed in the circumferential groove 14 that separates the outer-side land 30 from the outer-side shoulder 50. As illustrated in FIG. 2, each of the inner-side recesses 60 has a first groove part 60a that is communicated with the circumferential groove 12 and incliningly extends to one side in the circumferential direction in such a manner as to bite into the inner-side shoulder portion 40 side, and a second groove part 60b that is communicated with the circumferential groove 12 and incliningly extends to the other side in the circumferential direction in such a manner as to bite into the first block row B1 side of the inner-side land portion 20. In other words, when the inner-side recesses 60 are viewed as a whole, the inner-side recesses 60 extend so as to cross the circumferential groove 12 in the width direction and are formed so as to incline, as the whole, from the inner side to the other side in the circumferential direction toward the outer side in the width direction.

An inner-side end S1 of the first groove part 60a in the width direction is communicated with the inner-side shoulder sipe 44 described above, and the first groove part 60a and the inner-side shoulder sipe 44 extend, as being continuous in appearance, toward the inner-side tread end T1 side. Further, the inner-side end S1 of the first groove part 60a is located at an approximate center of a separation distance between outer-side ends Q1; Q1 of the lateral grooves 42; 42 which are adjacent to each other in the circumferential direction. A separation distance L1 between the inner-side end S1 and the outer-side end Q1 on one side in the circumferential direction, which is closest from the inner-side end S1, and a distance L2 between the inner-side end S1 and the outer-side end Q1 on the other side in the circumferential direction, which is closest from the inner-side end S1, are set such that, in appearance, a difference between these two distances is difficult to be discriminated.

By forming such first grooves 60a that are communicated with the circumferential groove 12, in comparison with a case where such grooves are not formed, a blank area in the inner-side shoulder portion 40 separated by the circumferential groove 12 is reduced and a visual unity is created between the first groove 60a and the lateral groove 42. Therefore, even in a case where the inside of the circumferential groove 12 and the groove bottom thereof are exposed due to the progress of wear, it is possible to effectively reduce the possibility of causing the user to misrecognize as if the wear limit is being reached. In addition, since the water absorbed by the inner-side shoulder sipes 44 can properly be drained into the circumferential groove 12 via the first groove parts 60a, it is possible to improve the water drainage performance.

An outer-side end S2 of the second groove part 60b is located at a center or an approximate center of a separation distance between the inner-side sipes 24; 24 that are adjacent to each other in the circumferential direction, and when the inner-side land portion 20 is viewed in the circumferential direction, the second groove parts 60b and the inner-side sipes 24 are in a positional relationship in which the second groove parts 60b and the inner-side sipes 24 are arranged in an alternating fashion.

### [About the outer-side recess]

As particularly illustrated in FIG. 2, each of the outer-side recesses 70 is communicated with the circumferential groove 14 and has a first groove part 70a that incliningly extends to one side in the circumferential direction in such a manner as to bite into the outer-side shoulder portion 50 side, and a second groove part 70b that is communicated with the circumferential groove 14 and incliningly extends to the other side in the circumferential direction in such a manner as to bite into the outer-side land portion 30. Namely, when the outer-side recesses 70 are viewed as a whole, the outer-side recesses 70 extend in such a manner as to cross the circumferential groove 14 in the width direction, and are formed so as to incline, as a whole, to one side in the circumferential direction from the inner side toward the outer side in the width direction. In other words, the above-mentioned inner-side recesses 60 and the outer-side recesses 70 are mutually inclined to opposite directions from the inner side toward the outer side in the width direction.

An outer-side end S3 of the first groove part 70a is communicated with the outer-side shoulder sipe 54 described above, and the first groove part 70a and the outer-side shoulder sipe 54 extend, as being continuous in appearance, to the outer-side tread end T2 side. Further, the outer-side end S3 of the first groove part 70a is located at a center or an approximate center of a separation distance between inner-side ends Q2; Q2 of the lateral grooves 52; 52 that are adjacent to each other in the circumferential direction. A separation distance L3 between the outer-side end S3 and the inner-side end Q2 on one side in the circumferential direction, which is closest from the outer-side end S3, and a separation distance L4 between the outer-side end S3 and the inner-side end Q2 on the other side in the circumferential direction, which is closest from the outer-side end S3, are set such that, in appearance, a difference between these two distances is difficult to be discriminated.

Similar to the first groove parts 60a described above, by forming the first groove parts 70a that are communicated with the circumferential groove 14, in comparison with a case where such grooves are not formed, a blank area in the outer-side shoulder portion 50 separated by the circumferential groove 14 is reduced and a visual unity is created between the first groove part 70a and the lateral groove 52. Therefore, even in a case where the inside of the circumferential groove 14 and the groove bottom thereof are exposed due to the progress of wear, it is possible to effectively reduce the possibility of causing the user to misrecognize as if the wear limit is being reached. In addition, since the water absorbed by the outer-side shoulder sipes 54 can properly be drained into the circumferential groove 14 via the first groove parts 70a, it is possible to improve the water drainage performance. Incidentally, the inner-side end of the second groove part 70b is located at a center or an approximate center of a separation distance between the sipes 32; 32 formed in the outer-side land portion 30.

As described above, the tire 1 according to the present embodiment has the inner-side recesses 60 formed so as to cross the circumferential groove 12 in the width direction and the outer-side recesses 70 formed so as to cross the circumferential groove 14 in the width direction. By forming the pair of recesses 60; 70, it is possible to reduce the possibility of misrecognition with respect to the wear limit which is easily affected by a positional relationship with the grooves formed in the surrounding areas. Further, as illustrated in FIG. 2, it is desirable, from the viewpoint of improving the water drainage performance, to set an inclination angle θ1 of the recess 60 and an inclination angle θ2 of the outer-side recess 70 to be parallel to the width direction, or to be such that the acute angle side becomes 45° or less relative to the width direction. Here, the inclination angle of the recess refers to an angle of a straight line connecting the innermost end point and the outermost end point of the recess, and the same applies to the following embodiments.

### [Example 2]

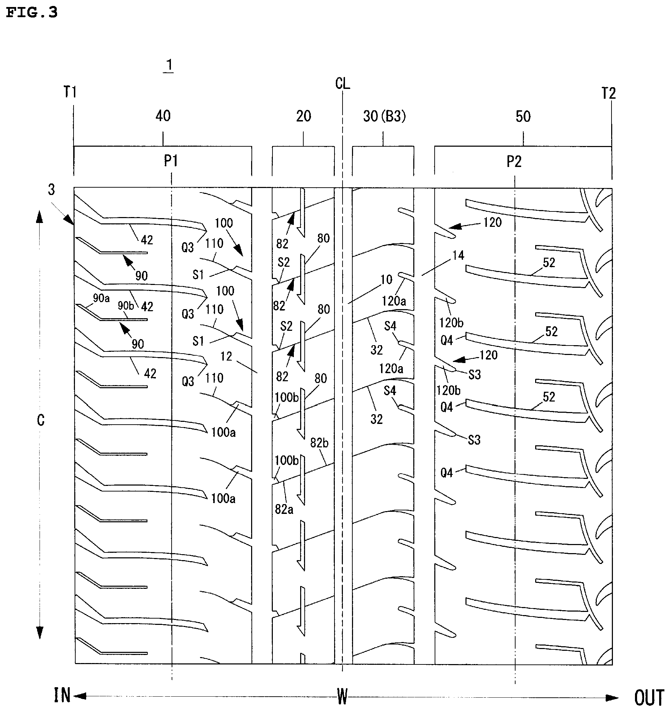

Next, Example 2, which is not according to the present invention but is useful for understanding the present invention, will be explained with reference to FIG. 3. In the following descriptions, parts that differ from those in Embodiment 1 will be described in detail, and for the parts same to those in Embodiment 1, the same signs are used and the descriptions will be omitted or simplified.

As illustrated in FIG. 3, in a tread 3 of a tire 1 according to Example 2, circumferential grooves 10; 12; 14, an inner-side land portion 20, an outer-side land portion 30, an inner-side shoulder portion 40, and an outer-side shoulder portion 50, which are defined mainly by the circumferential grooves 10, 12 and 14, are formed.

### [About the inner-side land portion]

As illustrated in FIG. 3, in the inner-side land portion 20, a plurality of narrow grooves 80 intermittently extending along the circumferential direction and sipes 82 extending between the circumferential groove 10 and the circumferential groove 12, are formed. The narrow grooves 80 are grooves that extend in the circumferential direction at a center or an approximate center of a separation distance in the width direction between the circumferential groove 10 and the circumferential groove 12 adjacent to the circumferential groove 10, and are arranged with an equal spacing from other narrow grooves 80 that are adjacent thereto in the circumferential direction. One end part of the narrow groove 80 in the circumferential direction is formed in a hook shape projecting to the inner side in the width direction, and by virtue of the hook shape, a wear feeling caused by breaking off of the narrow grooves can be reduced and also a block rigidity can be made appropriate, thus a road noise can be easily reduced. Each of the sipes 82 has a first sipe 82a that is communicated, at one end thereof, with the narrow groove 80 and, at the other end thereof, with an inner-side recess 100 which is described later, and a second sipe 82b that is communicated, at one end thereof, with the narrow groove 80 and, at the other end thereof, with the circumferential groove 10. The first sipe 82a and the second sipe 82b incline at the same angle toward the other side in the circumferential direction from the inner side to the outer side in the width direction, and extend so as to be continuous via a center or an approximate center of the narrow groove 80 in the circumferential direction.

### [About the inner-side shoulder portion]

As illustrated in FIG. 3, in the inner-side shoulder portion 40, a plurality of lateral grooves 42 and first inner-side shoulder sipes 90 each of which extends in the width direction between each of the lateral grooves 42, are formed.

Each of the first inner-side shoulder sipes 90 terminates, at both end parts thereof, in a non-ground contact area and has an inclined part 90a that incliningly extends to one side in the circumferential direction from the inner side in the width direction toward the outer side in the width direction so as to follow an inclined part of the lateral groove 42, and a straight-line part 90b that is communicated with the inclined part 90a and linearly extends along the width direction. Each of the first inner-side shoulder sipes 90 extends at a center or an approximate center of a separation distance between the lateral grooves 42:42 that are adjacent to each other in the circumferential direction.

### [About the inner-side recess]

As illustrated in FIG 3, inner-side recesses 100 are formed in the circumferential groove 12 that separates the inner-side land portion 20 from the inner-side shoulder portion 40. Each of the inner-side recess 100 has a first groove part 100a that is communicated with the circumferential groove 12 and incliningly extends to the other side in the circumferential direction in such a manner as to bite into the inner-side shoulder portion 40 side, and a second groove part 100b that is communicated with the circumferential groove 12 and incliningly extends to one side in the circumferential direction in such a manner as to bite into the inner-side land portion 20 side. In other words, when the inner-side recesses 100 are viewed as a whole, the inner-side recesses 100 extend so as to cross the circumferential groove 12 in the width direction and are formed so as to incline, as the whole, to one side in the circumferential direction from the inner side toward the outer side in the width direction.

An inner-side end S1 of the first groove part 100a, like the first groove part 60a described above, is located at a center or an approximate center of a separation distance between outer-side ends Q3; Q3 of the lateral grooves 42; 42 that are adjacent to each other in the circumferential direction. A separation distance between the inner-side end S1 and the outer-side end Q3 on one side in the circumferential direction, which is closest from the inner-side end S1, and a separation distance between the inner-side end S1 and the outer-side end Q3 on the other side in the circumferential direction, which is closest from the inner-side end S1, are set such that, in appearance, a difference between these two distances is difficult to be discriminated. Further, the inner-side ends Slare communicated with second inner-side shoulder sipes 110 that extend toward the inner side in the width direction. The second inner-side shoulder sipe 110 incliningly extends while gently curving toward the other side in the circumferential direction from the outer side to the inner side in the width direction, so as to extend along an inclination direction of the first groove part 100a. In comparison with Embodiment 1, the second inner-side shoulder sipes 110 terminate in the ground contact area and do not communicate with the first inner-side shoulder sipe 90 formed in the non-ground contact area. In other words, the inner-side shoulder portion 40 according to Embodiment 1 is defined roughly into the block-shape by the inner-side shoulder sipes 44 extending in the width direction, whereas in the inner-side shoulder portion 40 according to Example 2, the first inner-side shoulder sipe 90 and the second inner-side shoulder sipe 110 are separated, hence there is no clear section defined by the sipes.

By forming the first groove parts 110a and the second inner-side shoulder sipes 110 that are communicated with the first groove parts 110a, in comparison with a case where grooves and sipes are not formed, a blank area in the inner-side shoulder portion 40 separated by the circumferential groove 12 is reduced, and a visual unity is created between the inner-side shoulder sipe 110 and the lateral grooves 42. As a result, even if the inside of the circumferential groove 12 and the groove bottom thereof are exposed due to the progress of wear, it is possible to effectively reduce the possibility of causing the user to misrecognize as if the wear limit is being reached. In addition, because water absorbed by the second inner-side shoulder sipes 110 can properly be drained into the circumferential groove 12 via the first groove parts 100a, it is possible to improve the water drainage performance.

An outer-side end S2 of the second groove part 100b is communicated with the sipe 82 described above. As the sipes 82 laterally extending in the inner-side land portion 20 in the width direction are communicated with the second groove parts 100b, water absorbed by the sipes 82 can properly be drained from the circumferential groove 12 via the second groove parts 100b.

### [About the outer-side recess]

As illustrated in FIG. 3, outer-side recesses 120 are formed in the circumferential groove 14 that separates the outer-side land portion 30 from the outer-side shoulder portion 50. Each of the outer-side recesses 120 has a first groove part 120a that is communicated with the circumferential groove 14 and incliningly extends to the other side in the circumferential direction in such a manner as to bite into the outer-side shoulder portion 30 side, and a second groove 120b that is communicated with the circumferential groove 14 and incliningly extends to one side in the circumferential direction in such a manner as to bite into the outer-side shoulder portion 50 side. In other words, when the outer-side recesses 120 are viewed as a whole, the outer-side recesses 120 extend so as to cross the circumferential groove 14 in the width direction and are formed so as to incline, as the whole, to the one side in the circumferential direction from the inner side toward the outer side in the width direction. That is, the inner-side recesses 100 and the outer-side recesses 120 according to Example 2 are inclined to the same direction. Incidentally, it is desirable to set inclination angles of the inner-side recesses 100 and the outer-side recesses 120, taking into consideration the water drainage performance as similar to Embodiment 1, such that the inclination angles are parallel to the width direction or the acute angle side becomes 45° or less with respect to the width direction.

An inner-side end S4 of the first groove 120a is located at a center or an approximate center of a separation distance of the sipes 32; 32 extending along the width direction so as to define the outer-side land portion 30 into the block-shape. An outer-side end S3 of the second groove part 120b is located at a center or an approximate center of a separation distance between the inner-side ends Q4; Q4 of a plurality of lateral grooves 52; 52 that are adjacent to each other in the circumferential direction. A separation distance between the outer-side end S3 and the inner-side end Q4 on one side in the circumferential direction, which is closest from the outer-side end S3, and a separation distance between the outer-side end S3 and the inner-side end Q4 on the other side in the circumferential direction, which is closest from the outer-side end S3, are set such that, in appearance, a difference between these two distances is difficult to be discriminated.

In comparison with Embodiment 1, the second groove parts 120b terminate in the ground contact area and do not communicate with the grooves and the sipes formed in the non-ground contact area.

By forming such second groove parts 120b, in comparison with a case where such grooves are not formed, a blank area in the outer-side shoulder portion 50 separated by the circumferential groove 14 is reduced, and a visual unity is created between the second groove part 120b and the lateral groove 52. As a result, even if the inside of the circumferential groove 14 and the groove bottom thereof are exposed due to the progress of wear, it is possible to effectively reduce the possibility of causing the user to misrecognize as if the wear limit is being reached.

### [Example 3]

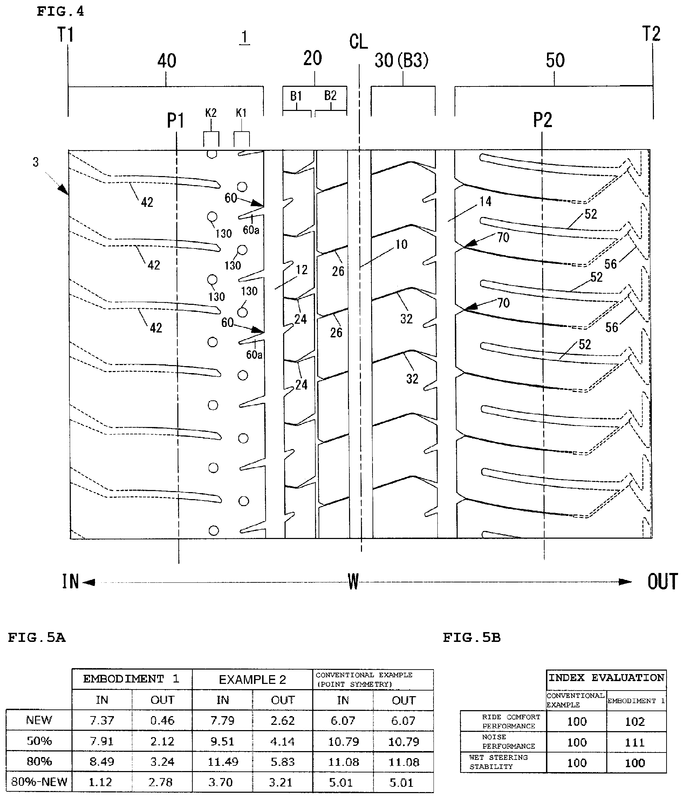

Next, Example 3, which is not according to the present invention but is useful for understanding the present invention, will be explained with reference to FIG. 4. In the following description, parts that differ from those in Embodiment 1 will be described in detail, and for the parts same to those in Embodiment 1, the same signs are used and descriptions will be omitted or simplified.

As illustrated in FIG. 4, Example 3 differs in that, in an inner-side shoulder portion 40 of a tire 1 of Example 3, a plurality of pinhole sipes 130 are formed in place of the inner-side shoulder sipes 44 described above. The plurality of pinhole sipes 130 are arranged so as to be provided in two rows along the circumferential direction. Each pinhole sipe 130 constituting a pinhole row K1 on the outer side in the width direction is located at a center or an approximate center of a separation distance in the circumferential direction of each of the above-mentioned first groove parts 60a that are communicated with the circumferential groove 12. Further, each of the pinhole sipes 130 constituting a pinhole row K2 on the inner side in the width direction is located at a center or an approximate center of a separation distance in the circumferential direction of the above-mentioned plurality of lateral grooves 42. Therefore, when the pinhole rows K1; K2 are viewed as a whole, each of the pinhole sipes 130 is arranged in an alternate fashion along the circumferential direction.

Here, a diameter of the pinhole sipe 130 is preferably 3.0 to 5.0 mm, and 3.5 to 4.0 is more preferable. Further, although the pinhole sipes 130 in FIG. 4 are arranged two per a predetermined unit pitch, it is preferable to arrange one to four, and more preferably two to three. On the other hand, if too many pinhole sipes 130 are arranged, not only becomes unable to sufficiently maintain the rigidity of the inner-side shoulder portion 40, but it may cause deterioration of the noise performance or uneven wear and so on.

As described above, by making the inner-side shoulder sipes 44 of the inner-side shoulder portion 40 in Embodiment 1 to be pinhole sipes, a compressive rigidity can be reduced, a steering stability performance can be improved, and the wear resistance performance can be improved.

Next, an explanation will be given with reference to FIG. 5A, as to simulation results of the tires 1, in worn states, according to Embodiment 1 and Example 2 described above and a tire T, in worn states, according to the conventional example illustrated in FIG. 6. The table illustrated in FIG. 5A is a table that shows, for each wear stage, changes in distance between the groove end parts formed in the inner-side shoulder portion 40 and in the outer-side shoulder portion 50. Here, as the wear stage, three wear stages of NEW (0% worn), 50% worn, and 80% worn were set, when a stage where the groove depth becomes 1.6 mm, measured with the use of a wear indicator, is defined as 100% (wear limit). Further, differences between the distance at 80% worn and the distance at NEW are also shown in the lowest row.

In the above-mentioned table, numerical values in the "IN" section of Embodiment 1 indicate a separation distance R1 parallel in the width direction between the inner-side end S1 of the first groove part 60a and the outer-side end Q1 of the lateral groove 42 illustrated in FIG. 1, and numerical values in the "OUT" section indicate, similar to the above, a separation distance (mm) parallel in the width direction between the outer-side end S3 of the first groove part 70a and the inner-side end Q2 of the lateral groove 52.

Further, numerical values in the "IN" section of Example 2 indicate, similar to the above, a separation distance parallel in the width direction between the inner-side end S1 of the first groove part 100a and the outer-side end Q3 of the lateral groove 42 illustrated in FIG. 3, and numerical values in the "OUT" section indicate, similar to the above, a separation distance parallel in the width direction between the outer-side end S3 of the second groove part 120b and the inner-side end Q4 of the lateral groove 52 illustrated in Figure 3. Furthermore, numerical values in the "CONVENTIONAL EXAMPLE" section indicate a separation distance parallel in the width direction between a tip end Q6 of a plurality of lateral grooves 520 formed in both of shoulder portions SH and an edge S6 of the circumferential groove closest to the tip end Q6 in the conventional tire T illustrated in FIG. 6.

As apparent from the above-mentioned table, when comparing the tires 1 according to Embodiment 1 and Example 2 with the tire T of the conventional example that is formed with circumferential grooves that do not have grooves corresponding to the recesses 60; 70 and the recesses 100; 120 according to Embodiment 1 and Example 2, the amount of change in the separation distance in the width direction at each wear stage is more gradual in the tires 1 according to Embodiment 1 and Example 2 than the conventional tire T. Hence, even if the wear progresses to a certain degree, it is possible to reduce that the user feels as if the tire wore out.

In addition, as apparent from each of the performance evaluations relating to the ride comfort, the noise, and the wet steering stability shown in FIG. 5B, the tire 1 according to Embodiment 1 surpasses the conventional tire T in all performance categories, thus the superiority of the tire 1 according to Embodiment 1 has been proved. Incidentally, values shown in FIG. 5B represent, as index values, the feeling evaluation by a test driver.

As described above, the present invention has been explained through the plurality of embodiments and examples, however, various modifications such as described below can be made. For example, a ratio of the treads (P1 to the edge of the circumferential groove 12), (P2 to the edge of the circumferential groove 14) of the shoulder portions to the tread width (P1 to P2) according to each of the embodiments and examples can be set in a range of 15% to 30% respectively, and more preferably in a range of 20% to 30% respectively. The widthwise dimensions of the inner-side land portion 20 and the outer-side land portion 30 according to each of the embodiments and examples can be set in a range of 20% to 30%, respectively, with respect to the tread width (P1 to P2). The groove widths, which are the widthwise dimensions of the narrow grooves 22; 80 according to each of the embodiments and examples, are preferably set to 20% or less, and more preferably to 15% or less, with respect to the groove widths of the circumferential grooves 10; 12; 14. The groove width of the narrow groove can be set to, for example, about between 0.1 mm and 3.0 mm. The widths of the sipes (sipe width) according to each of the embodiments and examples can be set to, for example, about between 0.1 mm and 2.0 mm. Further, when forming such a sipe in plural numbers along the circumferential direction, the separation distance between each sipe can be set to between 10 mm and 50 mm, and more preferably between 10 mm and 40 mm. By setting the distance in such a range, it is possible to improve the water drainage performance while suppressing the road noise. In addition, since an appropriate block rigidity can be secured, it is possible to suppress the uneven wear and improve the steering stability.

Furthermore, the depths of the inner-side recesses 60; 100 and the outer-side recesses 70; 120 according to each of the embodiments and examples may be set to be deeper at least than the wear limit (thickness) set in the tire 1, and may be, for example, set to the same degree as the groove depths of the corresponding circumferential grooves 12; 14.

In Embodiment 1, the inner-side sipe 24 has the curved part 24a, however, when the curved part is made to be a bent part, a bend angle of the bent part can be set in the range of 0° to 70°, and more preferably in the range of 0° to 50°.

In Example 2, the separation distance in the circumferential direction between the intermittently extending narrow grooves 80 can be set to between 3 mm and 10 mm, and more preferably between 4.5 mm and 6.5 mm. By setting such as the above, it is possible to reduce the road noise by virtue of relaxation of rigidity and to ensure the water drainage performance.

In summary, the present invention can be described as follows. Namely, a tire according to an aspect of the invention is provided as claimed in claim 1.

According to the above configuration, it is possible to make a tire capable of reducing a possibility of misrecognition by a user with respect to the wear limit while ensuring the wet performance and the road noise performance.

Further, an inclination angle of the recesses at an acute angle side with respect to the tire width direction may be set between 0° and 45°.

Further, the first land portion includes a first block row and a second block row; the first block row is defined, within the first land portion, by a narrow groove that has a groove width narrower than a groove width of the circumferential grooves and that extends in the circumferential direction, and first sipes extending from the narrow groove to the circumferential groove defining the first shoulder; the second block row is defined by the narrow groove and second sipes extending from the narrow groove to the circumferential groove that is adjacent to the circumferential groove defining the first shoulder portion; and each of the first sipes extends with a circumferentially convex curved part and is formed at a position offset from the second sipe in the circumferential direction.

### REFERENCE SIGN LIST

1: Tire, 3: Tread, 10; 12; 14: Circumferential grooves, 20: Inner-side land, 22: Narrow groove, 24: Inner-side sipe, 26: Outer-side sipe, 30: Outer-side land, 32: Sipe, 40: Inner-side shoulder portion, 42: Lateral groove, 44: Inner-side shoulder sipe, 50: Outer-side shoulder portion, 52: Lateral groove, 54: Outer-side shoulder sipe, 60; 100: Inner-side recesses, 70; 120: Outer-side recesses.

## Claims

1. A tire comprising:
at least three circumferential grooves (10, 12, 14);
a first shoulder portion (40) that is defined by a first circumferential groove (12) of the at least three circumferential grooves (10, 12, 14) and including a ground contact end on one side in a width direction;
a second shoulder portion (50) that is defined by a second circumferential groove (14) of the at least three circumferential grooves (10, 12, 14) and including a ground contact end on the other side in the width direction;
a first land portion (20) that is located between the first circumferential groove (12) defining the first shoulder portion (40) and a third circumferential groove (10) of the at least three circumferential grooves (10, 12, 14), which is adjacent to the first circumferential groove (12) defining the first shoulder portion (40);
a second land portion (30) that is located between the second circumferential groove (14) defining the second shoulder portion (50) and the third circumferential groove (10) adjacent to the second circumferential groove (14) defining the second shoulder portion (50);
recesses (60) that extend to both of the first shoulder portion (40) and the first land portion (20) across the first circumferential groove (12) defining the first shoulder portion (40), the recesses (60) being inner-side recesses (60) each having a first groove part (60a) that is communicated with the first circumferential groove (12) and incliningly extends to one side in the circumferential direction in such a manner as to bite into a side of the first shoulder portion (40), and a second groove part (60b) that is communicated with the first circumferential groove (12) and incliningly extends to the other side in the circumferential direction in such a manner as to bite into the first land portion (20); and
recesses (70) that extend to both of the second shoulder portion (50) and the second land portion (30) across the circumferential groove (14) defining the second shoulder portion (50), the recesses (70) being outer-side recesses (70) each having a first groove part (70a) that is communicated with the second circumferential groove (14) and incliningly extends to one side in the circumferential direction in such a manner as to bite into a side of the second shoulder portion (50), and a second groove part (70b) that is communicated with the second circumferential groove (14) and inclininglv extends to the other side in the circumferential direction in such a manner as to bite into the second land portion (30),
wherein the inner-side recesses (60) and the outer-side recesses (70) are mutually inclined to opposite directions from the inner side toward the outer side in the width direction, and
**characterized in that**
the first land portion (20) includes a first block row (B1) and a second block row (B2);
the first block row (B1) is defined, within the first land portion (20), by a narrow groove (22) that has a groove width narrower than a groove width of any of the at least three circumferential grooves (10, 12, 14) and that extends in the circumferential direction, and first sipes (24) extending from the narrow groove (22) to the first circumferential groove (12) defining the first shoulder portion (40);
the second block row (B2) is defined by the narrow groove (22) and second sipes (26) extending from the narrow groove (22) to the third circumferential groove (10) adjacent to the first circumferential groove (12) defining the first shoulder portion (40); and
each of the first sipes (24) extends with a circumferentially convex curved part and is formed at a position offset from the second sipe (26) in the circumferential direction.

2. The tire according to claim 1, wherein an angle of inclination of the recesses (60, 70) at an acute angle side with respect to the tire width direction is between 0° and 45°.

## Patentansprüche

1. Reifen, umfassend:
mindestens drei Umfangsnuten (10, 12, 14);
einen ersten Schulterabschnitt (40), der durch eine erste Umfangsnut (12) der mindestens drei Umfangsnuten (10, 12, 14) definiert ist und in Breitenrichtung auf einer Seite ein Massekontaktende einschließt;
einen zweiten Schulterabschnitt (50), der durch eine zweite Umfangsnut (14) der mindestens drei Umfangsnuten (10, 12, 14) definiert ist und in Breitenrichtung auf der anderen Seite ein Massekontaktende einschließt;
einen ersten Stegabschnitt (20), der zwischen der ersten Umfangsnut (12), die den ersten Schulterabschnitt (40) definiert, und einer dritten Umfangsnut (10) der mindestens drei Umfangsnuten (10, 12, 14) angeordnet ist, die an die erste Umfangsnut (12), die den ersten Schulterabschnitt (40) definiert, angrenzt;
einen zweiten Stegabschnitt (30), der zwischen der zweiten Umfangsnut (14), die den zweiten Schulterabschnitt (50) definiert, und der dritten Umfangsnut (10) neben der zweiten Umfangsnut (14), die den zweiten Schulterabschnitt (50) definiert, angeordnet ist;
Aussparungen (60), die sich sowohl zum ersten Schulterabschnitt (40) als auch zum ersten Stegabschnitt (20) über die den ersten Schulterabschnitt (40) definierende erste Umfangsnut (12) erstrecken, wobei die Aussparungen (60) innenseitige Aussparungen (60) sind, die jeweils einen ersten Nutteil (60a), der mit der ersten Umfangsnut (12) in Verbindung steht und sich in Umfangsrichtung schräg zu einer Seite erstreckt, so dass er in eine Seite des ersten Schulterabschnitts (40) eingreift, und einen zweiten Nutteil (60b) aufweisen, der mit der ersten Umfangsnut (12) in Verbindung steht und sich in Umfangsrichtung schräg zur anderen Seite erstreckt, so dass er in den ersten Stegabschnitt (20) eingreift; und
Aussparungen (70), die sich sowohl zum zweiten Schulterabschnitt (50) als auch zum zweiten Stegabschnitt (30) über die den zweiten Schulterabschnitt (50) definierende Umfangsnut (14) erstrecken, wobei die Aussparungen (70) außenseitige Aussparungen (70) sind, die jeweils einen ersten Nutteil (70a), der mit der zweiten Umfangsnut (14) in Verbindung steht und sich schräg zu einer Seite in Umfangsrichtung erstreckt, so dass er in eine Seite des zweiten Schulterabschnitts (50) eingreift, und einen zweiten Nutteil (70b) aufweisen, der mit der zweiten Umfangsnut (14) in Verbindung steht und sich schräg zu der anderen Seite in Umfangsrichtung erstreckt, so dass er in den zweiten Stegabschnitt (30) eingreift,
wobei die innenseitigen Aussparungen (60) und die außenseitigen Aussparungen (70) in Breitenrichtung von der Innenseite zur Außenseite hin in entgegengesetzte Richtungen geneigt sind, und
**dadurch gekennzeichnet, dass**
der erste Stegabschnitt (20) eine erste Blockreihe (B1) und eine zweite Blockreihe (B2) einschließt;
die erste Blockreihe (B1) innerhalb des ersten Stegabschnitts (20) durch eine schmale Nut (22) definiert ist, die eine Nutbreite aufweist, die schmaler ist als die Nutbreite einer der mindestens drei Umfangsnuten (10, 12, 14), und die sich in Umfangsrichtung erstreckt, und durch erste Lamellen (24), die sich von der schmalen Nut (22) zur ersten Umfangsnut (12) erstrecken und den ersten Schulterabschnitt (40) definieren;
die zweite Blockreihe (B2) durch die schmale Nut (22) und zweite Lamellen (26) definiert ist, die sich von der schmalen Nut (22) zur dritten Umfangsnut (10) erstrecken, die an die erste Umfangsnut (12) angrenzt und den ersten Schulterabschnitt (40) definiert; und
jede der ersten Lamellen (24) sich mit einem in Umfangsrichtung konvex gekrümmten Teil erstreckt und an einer Position ausgebildet ist, die in Umfangsrichtung von der zweiten Lamelle (26) versetzt ist.

2. Reifen nach Anspruch 1, wobei ein Neigungswinkel der Vertiefungen (60, 70) auf einer spitzen Winkelseite in Bezug auf die Reifenbreitenrichtung zwischen 0° und 45° liegt.

## Revendications

1. Pneu comprenant :
au moins trois rainures circonférentielles (10, 12, 14) ;
une première portion épaulement (40) qui est définie par une première rainure circonférentielle (12) des au moins trois rainures circonférentielles (10, 12, 14) et incluant une extrémité de contact avec le sol sur un côté dans le sens de la largeur ;
une seconde portion épaulement (50) qui est définie par une deuxième rainure circonférentielle (14) des au moins trois rainures circonférentielles (10, 12, 14) et incluant une extrémité de contact avec le sol sur l'autre côté dans le sens de la largeur ;
une première portion d'appui (20) qui est située entre la première rainure circonférentielle (12) définissant la première portion épaulement (40) et une troisième rainure circonférentielle (10) des au moins trois rainures circonférentielles (10, 12, 14), qui est adjacente à la première rainure circonférentielle (12) définissant la première portion épaulement (40) ;
une seconde portion d'appui (30) qui est située entre la deuxième rainure circonférentielle (14) définissant la seconde portion épaulement (50) et la troisième rainure circonférentielle (10) adjacente à la deuxième rainure circonférentielle (14) définissant la seconde portion épaulement (50) ;
des évidements (60) qui s'étendent à la fois vers la première portion épaulement (40) et la première portion d'appui (20) à travers la première rainure circonférentielle (12) définissant la première portion épaulement (40), les évidements (60) étant des évidements côté intérieur (60) présentant chacun une première partie rainure (60a) qui communique avec la première rainure circonférentielle (12) et s'étend de manière inclinée vers un côté dans la direction circonférentielle de manière à mordre dans un côté de la première portion épaulement (40), et une seconde partie rainure (60b) qui communique avec la première rainure circonférentielle (12) et s'étend de manière inclinée vers l'autre côté dans la direction circonférentielle de manière à mordre dans la première portion d'appui (20) ; et
des évidements (70) qui s'étendent à la fois vers la seconde portion épaulement (50) et la seconde portion d'appui (30) à travers la rainure circonférentielle (14) définissant la seconde portion épaulement (50), les évidements (70) étant des évidements côté extérieur (70) présentant chacun une première partie rainure (70a) qui communique avec la deuxième rainure circonférentielle (14) et s'étend de manière inclinée vers un côté dans la direction circonférentielle de manière à mordre dans un côté de la seconde portion épaulement (50), et une seconde partie rainure (70b) qui communique avec la deuxième rainure circonférentielle (14) et s'étend de manière inclinée vers l'autre côté dans la direction circonférentielle de manière à mordre dans la seconde portion d'appui (30),
dans lequel les évidements côté intérieur (60) et les évidements côté extérieur (70) sont mutuellement inclinés dans des directions opposées du côté intérieur vers le côté extérieur dans le sens de la largeur, et
**caractérisé en ce que**
la première portion d'appui (20) inclut une première rangée de blocs (B1) et une seconde rangée de blocs (B2) ;
la première rangée de blocs (B1) est définie, dans la première portion d'appui (20), par une rainure étroite (22) qui présente une largeur de rainure plus étroite qu'une largeur de rainure de l'une quelconque des au moins trois rainures circonférentielles (10, 12, 14) et qui s'étend dans la direction circonférentielle, et des premières lamelles (24) s'étendant de la rainure étroite (22) à la première rainure circonférentielle (12) définissant la première portion épaulement (40) ;
la seconde rangée de blocs (B2) est définie par la rainure étroite (22) et des secondes lamelles (26) s'étendant de la rainure étroite (22) à la troisième rainure circonférentielle (10) adjacente à la première rainure circonférentielle (12) définissant la première portion épaulement (40) ; et
chacune des premières lamelles (24) s'étend avec une partie incurvée circonférentiellement convexe et est formée en une position décalée par rapport à la seconde lamelle (26) dans la direction circonférentielle.

2. Pneu selon la revendication 1, dans lequel un angle d'inclinaison des évidements (60, 70) au niveau d'un côté angle aigu par rapport au sens de la largeur du pneu est compris entre 0° et 45°.
